# EUROPEAN PATENT SPECIFICATION

(11) **EP 3 758 202 B1**
(45) Date of publication and mention of the grant of the patent: **27.03.2024**
(21) Application number: 19919544.7
(22) Date of filing: 03.07.2019
(51) Int. Cl.: H02K 15/06, H02K 15/04

(54) **MOTOR HAIRPIN TYPE CONDUCTING BAR WINDING DEVICE**
MOTORHAARNADELARTIGE LEITERSTABWICKELVORRICHTUNG
DISPOSITIF D'ENROULEMENT DE BARRE CONDUCTRICE DE TYPE EN ÉPINGLE À CHEVEUX DE MOTEUR

(30) Priority: 27.03.2019 CN 201920401717 U
(43) Date of publication of application: 30.12.2020
(73) Proprietor: Juli Automation Equipment (Zhejiang) Co., Ltd., Jiaxing City, Zhejiang 314000 (CN)
(72) Inventor: LIAO, Wangsheng, Jiaxing Zhejiang 314000 (CN); ZHANG, Riping, Jiaxing Zhejiang 314000 (CN); WU, Yinglong, Jiaxing Zhejiang 314000 (CN); LI, Guanghai, Jiaxing Zhejiang 314000 (CN); HE, Denggao, Jiaxing Zhejiang 314000 (CN)
(74) Representative: Ipey
(86) International application number: PCT/CN2019/094463
(87) International publication number: WO 2020/191945

(56) References cited:
- CN-A- 103 904 805
- CN-A- 106 787 521
- CN-A- 107 786 049
- CN-A- 109 450 193
- CN-A- 109 450 193
- CN-U- 205 542 383
- US-A- 5 470 025
- US-A1- 2018 233 995

## Description

### TECHNICAL FIELD

This disclosure generally relates to the technical field of motor production equipment, and more particularly, to a motor hairpin-type conducting-bar winding device.

### BACKGROUND

Presently, new energy vehicles adopt motors with improved stators and rotors, which has made improvements in motor torque, power, efficiency, performance and noise-reduction, for instance, the stator's winding adopting a hairpin-type winding. However, the limited space among the coils of the hairpin-type winding makes the winding process within the stator extremely difficult. Using automatic production equipment to solve the aforesaid problem is impossible, while the manual winding assembly is inefficient. Document CN109450193A discloses a motor hairpin -type conducting-bar winding device, comprising a four axis robot, a supplying device, a mechinal arm and a mounting mold, the supplying device comprising a vibrator. The mechanical arm further comprises a connecting portion for fixedly connecting the four-axis robot and the mounting mold further comprises a base and a mounting disc fixed with the base, wherein the mounting disc is provided with a plurality of insertion holes distributed along the circumference of the mounting disc for allowing one leg of the hairpin-type conducting bar to be inserted in. Thus, it is urgent for those skilled in the art to develop a hairpin-type conducting-bar assembling process capable of being automatically performed by equipment such that the assembling efficiency of the hairpin-type conducting-bar winding is significantly improved.

### SUMMARY

The purpose of the present disclosure is to provide a motor hairpin-type conducting-bar winding device.

To achieve the above purpose, the present disclosure adopts the following technical solution: a motor hairpin-type conducting-bar winding device as disclosed in appended independent claim 1 comprising a four-axis robot, a supplying device, a mechanical arm and a mounting mold, wherein the supplying device comprises a pushing plate, a pushing air cylinder for propelling the pushing plate to rise and fall, a horizontal supplying plate arranged on one side of the pushing plate, a vibrator for propelling the horizontal supplying plate to vibrate such that a linear vibrating-supplying is achieved, an obliquely-arranged hanging rod connected with the horizontal supplying plate, an inclined supplying plate arranged on the other side of the pushing plate, an insertion rod facing the highest end of the inclined supplying plate, a telescopic air cylinder for propelling the insertion rod to move to the highest end of the inclined supplying plate, a lifting rod located at the lowest end of the inclined supplying plate, and a vertical air cylinder for propelling the lifting rod to rise and fall, wherein the lowest end of the hanging rod is connected with the horizontal supplying plate, the lifting rod is horizontally arranged and provided with an annular groove, and the upper end of the pushing plate is provided with a recess for allowing the inserting rod to be inserted in, wherein the mechanical arm comprises a connecting portion for fixedly connecting the four-axis robot, wherein the two sides of the connecting portion are respectively provided with a left mounting plate and a right mounting plate which are vertically arranged, wherein the upper ends of the left mounting plate and the right mounting plate are bent and then fixedly connected with the connecting portion, wherein the lower end of the left mounting plate is fixedly provided with a horizontally-arranged first air cylinder, and the piston rod of the first air cylinder is fixedly connected with a first air gripper, wherein a second air cylinder and a third air cylinder which are horizontally arranged are fixed to the lower end of the right mounting plate, and the piston rod of the second air cylinder is fixedly connected with a second air gripper, wherein the piston rod of the third air cylinder is fixedly connected with a pushing board, the first air gripper and the second air gripper are horizontally arranged in a relatively staggered manner, and the pushing board is located above the second air gripper and faces the same direction as the second air gripper, wherein the mounting mold comprises a base and a mounting disc fixed with the base, wherein the mounting disc is provided with a plurality of insertion holes distributed along the circumference of the mounting disc for allowing one leg of the hairpin-type conducting bar to be inserted in, and is provided with a plurality of crescent-shaped insertion holes distributed along the circumference of the mounting disc for allowing the other leg of the hairpin-type conducting bar to be inserted in.

In another aspect of the present disclosure, the second air gripper is fixed on an L-shaped plate, and the L-shaped plate comprises a horizontal plate arranged horizontally and a vertical plate arranged vertically. The second air gripper is fixed to the horizontal plate, and the upper end of the vertical plate is fixedly connected with the piston rod of the second air cylinder. The vertical plate and the right mounting plate are respectively provided with a guide hole for allowing the pushing board to pass through, and the second air cylinder and the third air cylinder are respectively fixed on the two sides of the right mounting plate.

In another aspect of the present disclosure, the two sides of the second air cylinder are respectively provided with a guide groove, and the two sides of the upper end of the vertical plate are respectively fixed with a guide bar capable of sliding in the corresponding guide groove. The guide groove is in the same direction as the piston rod of the second air cylinder.

In another aspect of the present disclosure, a plurality of limiting columns are arranged on one side of the upper end of the pushing plate close to the inclined supplying plate, and an auxiliary plate is arranged above the horizontal supplying plate. One side of the auxiliary plate close to the pushing plate is provided with a sliding groove, and the pushing plate rises and falls in the sliding groove. The telescopic cylinder is fixed with the upper end of the auxiliary plate, and the lower end of the auxiliary plate is provided with a supplying hole for allowing the horizontal supplying plate to pass through.

In another aspect of the present disclosure, the two sides of the lifting rod are respectively provided with a clamping block, and the two clamping blocks are oppositely arranged. The opposite side of each clamping block is provided with a positioning groove.

In another aspect of the present disclosure, the lower end of the positioning groove is provided with a flared portion which is gradually widened downward.

In another aspect of the present disclosure, the lifting rod is fixed to a sliding block, and the vertical air cylinder propels the sliding block to move on a vertically-arranged track.

In another aspect of the present disclosure, the upper end of the hanging rod is fixedly provided with an elastic buffering portion, the surface of the elastic buffering portion is an inclined surface, and the inclined surface inclines in the same direction as the hanging rod.

In another aspect of the present disclosure, the hanging rod is connected with a supporting rod used for supporting the hanging rod, a supporting column is hinged with the supporting rod, and a ring sleeve is fixed with the upper end of the supporting column. The hanging rod is provided with an annular groove, the ring sleeve is sleeved in the annular groove, and the outer surface of the ring sleeve is flush with the surface of the hanging rod. The highest end of the hanging rod is hinged with a fixing block.

The operating principle of the present disclosure is: the formed hairpin-type conducting bars are sequentially dropped onto the hanging rod, and the two legs of each hairpin-type conducting bar are respectively located on the two sides of the hanging rod. Depending on their own weight, the two legs of each hairpin-type conducting bar gradually slide to the horizontal supplying plate along the hanging rod. The horizontal supplying plate vibrates to form a linear vibrating-supplying, so that the hairpin-type conducting bars are shaken off on the pushing plate one by one. At this point, the pushing cylinder pushes the hairpin-type conducting bar on the pushing plate up, and the telescopic cylinder propels the insertion rod such that the insertion rod is inserted into the recess formed in the upper end of the pushing plate. Subsequently, the pushing plate falls, thereby leaving the hairpin-type conducting bar on the insertion rod. The hairpin-type conducting bar on the insertion rod slides to the inclined supplying plate under its own weight and then continuously slides down until falling onto the lifting rod and hanging in the annular groove. At this point, the vertical cylinder propels the lifting rod to rise to a specified height, the four-axis robot controls the mechanical arm to move to the side of the hairpin-type conducting bar, and the first air cylinder and the second air cylinder respectively control the first air gripper and the second air gripper to extend out. The first air gripper and the second air gripper respectively grip the two legs and of the hairpin-type conducting bar from the two sides of the hairpin-type conducting bar. Subsequently, the four-axis robot controls the mechanical arm to move to the position above the winding mold and then move down. At this point, the conducting-bar leg gripped by the first air gripper is inserted into a specified insertion hole, and the other conducting-bar leg gripped by the second air gripper is inserted into a specified crescent-shaped insertion hole. Then, the first air gripper and the second air gripper respectively release the conducting-bar legs, and the third air cylinder propels the pushing board to push the conducting-bar leg in the insertion hole to rotate, which enables the hairpin-type conducting bar to rotate around the other conducting-bar leg, and allows the conducting-bar leg in the crescent-shaped insertion hole to rotate to a specified position. Thus, the installation of a motor hairpin-type conducting bar is completed. After all hairpin-type conducting bars are inserted in the mounting mold, the winding is transferred into the stator.

Compared with the prior art, the present disclosure has the following advantages: the motor hairpin-type conducting-bar winding device of the present disclosure achieves accurate supplying of conducting bars through the supplying device, which greatly improves the supplying efficiency of conducting bars. Moreover, the four-axis robot controls the mechanical arm to grasp, transfer, insert and rotate the hairpin-type conducting bars, which allows the conducting bars to be quickly accurately assembled. After the winding is formed, it is transferred into the motor's stator, significantly saving the cost and labor for assembling the winding while greatly improving the production efficiency of motors.

### BRIEF DESCRIPTION OF THE DRAWINGS

Figure 1 is a conceptual diagram illustrating an example structure of the present disclosure.
Figure 2 is a conceptual diagram illustrating an example structure of the supplying device of the present disclosure.
Figure 3 is a conceptual diagram illustrating an example structure of the supplying device of the present disclosure from another viewing angle.
Figure 4 is a conceptual diagram illustrating an example structure of the mechanical arm of the present disclosure.
Figure 5 is a conceptual diagram illustrating an example structure when the mechanical arm is assembled on the four-axis robot.
Figure 6 is a conceptual diagram illustrating an example structure of the mounting mold of the present disclosure.
Figure 7 is a conceptual diagram illustrating an example structure after the hairpin-type conducting bars are wound.

### DETAILED DESCRIPTION

Figures and detailed embodiments are combined hereinafter to further elaborate the technical solution of the present disclosure.

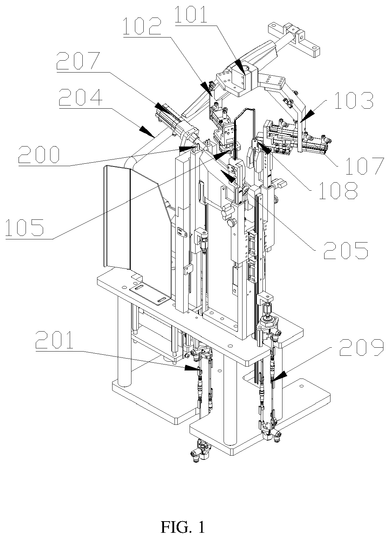

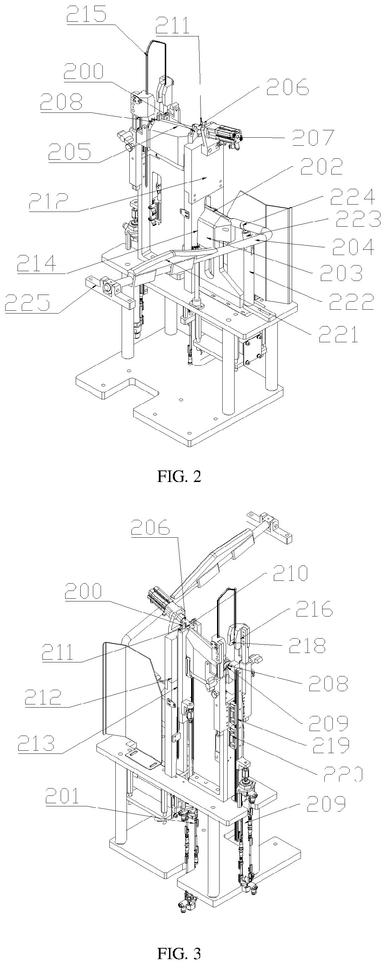

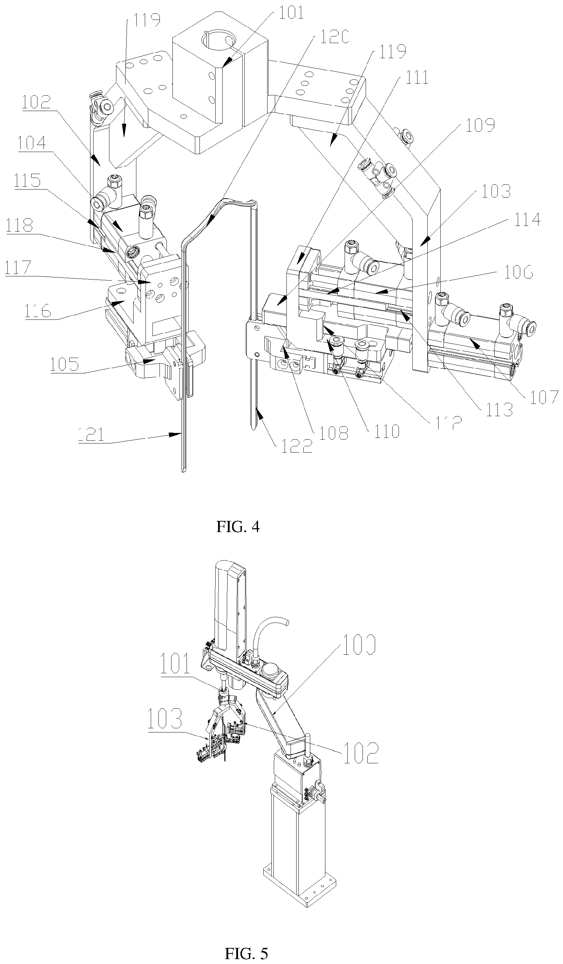

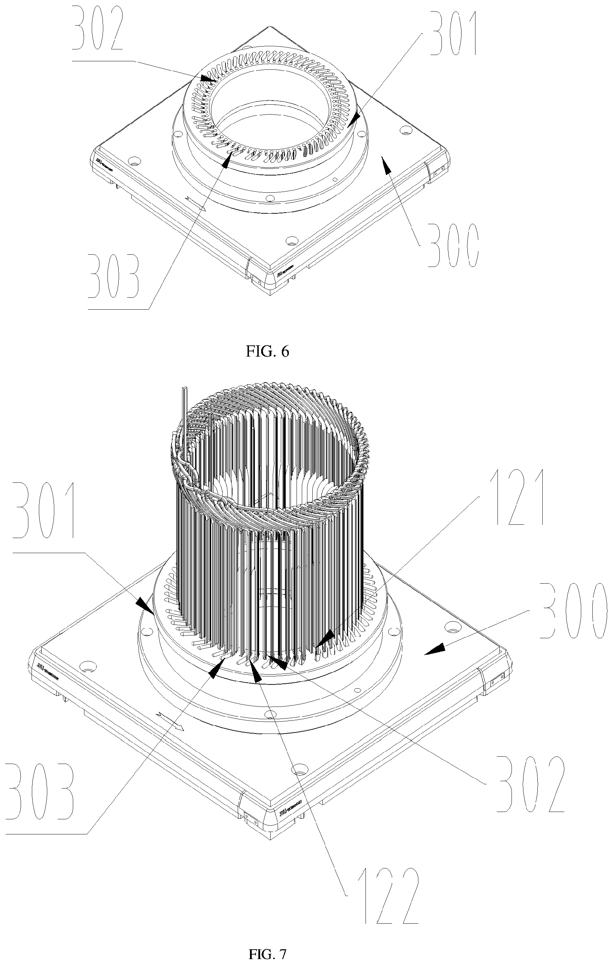

As shown in Figures 1-7, the motor hairpin-type conducting-bar winding device of the present disclosure comprises a four-axis robot, a supplying device, a mechanical arm and a mounting mold.

Further, the supplying device comprises a pushing plate 200, a pushing air cylinder 201 for propelling the pushing plate 200 to rise and fall, a horizontal supplying plate 202 arranged on one side of the pushing plate 200, a vibrator 203 for propelling the horizontal supplying plate 202 to vibrate such that a linear vibrating-supplying is achieved, an obliquely-arranged hanging rod 204 connected with the horizontal supplying plate 202, an inclined supplying plate 205 arranged on the other side of the pushing plate 200, an insertion rod 206 facing the highest end of the inclined supplying plate 205, a telescopic air cylinder 207 for propelling the insertion rod 206 to move to the highest end of the inclined supplying plate 205, a lifting rod 208 located at the lowest end of the inclined supplying plate 205 and a vertical air cylinder 209 for propelling the lifting rod 208 to rise and fall, wherein the lowest end of the hanging rod 204 is connected with the horizontal supplying plate 202, the lifting rod 208 is horizontally arranged and provided with an annular groove, and the upper end of the pushing plate 200 is provided with a recess 210 for allowing the inserting rod 206 to be inserted in.

Further, the mechanical arm comprises a connecting portion 101 for fixedly connecting the four-axis robot 100, wherein the two sides of the connecting portion 101 are respectively provided with a left mounting plate 102 and a right mounting plate 103 which are vertically arranged. The upper ends of the left mounting plate 102 and the right mounting plate 103 are bent and then fixedly connected with the connecting portion 101. The lower end of the left mounting plate 102 is fixedly provided with a horizontally-arranged first air cylinder 104, and the piston rod of the first air cylinder 104 is fixedly connected with a first air gripper 105. A second air cylinder 106 and a third air cylinder 107 which are horizontally arranged are fixed to the lower end of the right mounting plate 103, and the piston rod of the second air cylinder 106 is fixedly connected with a second air gripper 108. The piston rod of the third air cylinder 107 is fixedly connected with a pushing board 109, the first air gripper 105 and the second air gripper 108 are horizontally arranged in a relatively staggered manner, and the pushing board 109 is located above the second air gripper 108 and faces the same direction as the second air gripper 108.

Further, the mounting mold comprises a base 300 and a mounting disc 301 fixed with the base. The mounting disc 301 is provided with a plurality of insertion holes 302 distributed along the circumference of the mounting disc 301 for allowing one leg 121 of the hairpin-type conducting bar 120 to be inserted in, and is provided with a plurality of crescent-shaped insertion holes 303 distributed along the circumference of the mounting disc 301 for allowing the other leg 122 of the hairpin-type conducting bar 120 to be inserted in.

The four-axis robot 100 controls the mechanical arm to move to the side of the hairpin-type conducting bar 120, and the first air cylinder 104 and the second air cylinder 106 respectively control the first air gripper 105 and the second air gripper 108 to extend out. The first air gripper 105 and the second air gripper 108 respectively grip the two legs 121 and 122 of the hairpin-type conducting bar 120 from the two sides of the hairpin-type conducting bar 120. Subsequently, the four-axis robot 100 controls the mechanical arm to move to the position above the winding mold and then move down. At this point, the conducting-bar leg 121 gripped by the first air gripper 105 is inserted into a specified insertion hole 302, and the other conducting-bar leg 122 gripped by the second air gripper 108 is inserted into a specified crescent-shaped insertion hole 303. Then, the first air gripper 105 and the second air gripper 108 respectively release the conducting-bar legs 121 and 122, and the third air cylinder 107 propels the pushing board 109 to push the conducting-bar leg 122 in the insertion hole 302 to rotate, which enables the hairpin-type conducting bar 120 to rotate around the other conducting-bar leg 121, and allows the conducting-bar leg 122 in the crescent-shaped insertion hole 303 to rotate to a specified position.

The second air gripper 108 is fixed on an L-shaped plate, and the L-shaped plate comprises a horizontal plate 110 arranged horizontally and a vertical plate 111 arranged vertically. The second air gripper 108 is fixed to the horizontal plate 110, and the upper end of the vertical plate 111 is fixedly connected with the piston rod of the second air cylinder 106. The vertical plate 111 and the right mounting plate 103 are respectively provided with a guide hole 112 for allowing the pushing board 109 to pass through, and the second air cylinder 106 and the third air cylinder 107 are respectively fixed on the two sides of the right mounting plate 103. The aforesaid arrangement makes the installation of the second air cylinder 106, the third air cylinder 107, the second air gripper 108 and the pushing board 109 more compact.

The two sides of the second air cylinder 106 are respectively provided with a guide groove 113, and the two sides of the upper end of the vertical plate 111 are respectively fixed with a guide bar 114 capable of sliding in the corresponding guide groove 113. The guide groove 113 is in the same direction as the piston rod of the second air cylinder 106. The guide groove 113 and the guide bar 114 interact to make the operation of the second air gripper 108 smooth and precise.

A plurality of limiting columns 211 are arranged on one side of the upper end of the pushing plate 200 close to the inclined supplying plate 205, and an auxiliary plate 212 is arranged above the horizontal supplying plate 202. One side of the auxiliary plate 212 close to the pushing plate 200 is provided with a sliding groove 213, and the pushing plate 200 rises and falls in the sliding groove 213. The telescopic cylinder 207 is fixed with the upper end of the auxiliary plate 212, and the lower end of the auxiliary plate 212 is provided with a supplying hole 214 for allowing the horizontal supplying plate 202 to pass through. The auxiliary plate 212 enables the pushing plate 200 to propel the second hairpin-type conducting bar 215 to rise stably during the rising process, and prevents the second hairpin-type conducting bar 215 from falling off.

The two sides of the lifting rod 208 are respectively provided with a clamping block 216, and the two clamping blocks 216 are oppositely arranged. The opposite side of each clamping block 216 is provided with a positioning groove 217, and the positioning grooves 217 enable the legs of the second hairpin-type conducting bar 215 to be positioned accurately, thereby allowing the mechanical arm to precisely grasp.

The lower end of the positioning groove 217 is provided with a flared portion 218 which is gradually widened downward.

The lifting rod 208 is fixed to a sliding block 219, and the vertical air cylinder 209 propels the sliding block 219 to move on a vertically-arranged track 220.

The upper end of the hanging rod 204 is fixedly provided with an elastic buffering portion 221, the surface of the elastic buffering portion 221 is an inclined surface, and the inclined surface inclines in the same direction as the hanging rod 204. The second hairpin-type conducting bar 215 falls onto the elastic buffering portion 221 after being shaped such that it is stably hung on the hanging rod 204.

The hanging rod 204 is connected with a supporting rod 222 used for supporting the hanging rod 204, a supporting column 223 is hinged with the supporting rod 222, and a ring sleeve 224 is fixed with the upper end of the supporting column 223. The hanging rod 204 is provided with an annular groove, the ring sleeve 224 is sleeved in the annular groove, and the outer surface of the ring sleeve 224 is flush with the surface of the hanging rod 204. The highest end of the hanging rod 204 is hinged with a fixing block 225, and the fixing block 225 is fixed by a support. The fixing block 225 and the supporting rod 222 keep the hanging rod 204 stable. As the highest end of the hanging rod 204 is hinged with the fixing block 225, and the supporting column

223 is hinged with the supporting rod 222, the horizontal supplying plate 202 propelling the hanging rod 204 to vibrate together is facilitated, which ensures that the second hairpin-typed conducting bar 215 on the hanging rod 204 moves smoothly downward.

The above are merely preferred embodiments of the present disclosure. Those skilled in the art may make modifications and alterations as long as they fall into the scope defined by the claims of the present disclosure.

## Claims

1. A motor hairpin-type conducting-bar winding device, comprising:
a four-axis robot (100),
a supplying device,
a mechanical arm comprising
a connecting portion (101) for fixedly connecting the four-axis robot (100), and
a mounting mold comprising
a base (300) and a mounting disc (301) fixed with the base (300), wherein the mounting disc (301) is provided with a plurality of insertion holes (302) distributed along the circumference of the mounting disc (301) for allowing one leg (121) of the hairpin-type conducting bar (120) to be inserted in;
wherein the supplying device comprises:
a pushing plate (200),
a pushing air cylinder (201) for propelling the pushing plate (200) to rise and fall,
a horizontal supplying plate (202) arranged on one side of the pushing plate (200),
a vibrator (203) for propelling the horizontal supplying plate (202) to vibrate such that a linear vibrating-supplying is achieved,
an obliquely-arranged hanging rod (204) connected with the horizontal supplying plate (202),
an inclined supplying plate (205) arranged on the other side of the pushing plate (200),
an insertion rod (206) facing the highest end of the inclined supplying plate (205), a telescopic air cylinder (207) for propelling the insertion rod (206) to move to the highest end of the inclined supplying plate (205),
a lifting rod (208) located at the lowest end of the inclined supplying plate (205), and a vertical air cylinder (209) for propelling the lifting rod (208) to rise and fall,
wherein the lowest end of the hanging rod (204) is connected with the horizontal supplying plate (202), the lifting rod (208) is horizontally arranged and provided with an annular groove, and the upper end of the pushing plate (200) is provided with a recess (210) for allowing the inserting rod to be inserted in,
wherein the two sides of the connecting portion (101) are comprised by a mechanical arm respectively provided with a left mounting plate (102) and a right mounting plate (103) which are vertically arranged, wherein the upper ends of the left mounting plate (102) and the right mounting plate (103) are bent and then fixedly connected with the connecting portion (101), wherein the lower end of the left mounting plate (102) is fixedly provided with a horizontally-arranged first air cylinder (104), and the piston rod of the first air cylinder (104) is fixedly connected with a first air gripper (105), wherein a second air cylinder (106) and a third air cylinder (107) which are horizontally arranged are fixed to the lower end of the right mounting plate (103), and the piston rod of the second air cylinder (106) is fixedly connected with a second air gripper (108), wherein the piston rod of the third air cylinder (107) is fixedly connected with a pushing board (109), the first air gripper (105) and the second air gripper (108) are horizontally arranged in a relatively staggered manner, and the pushing board (109) is located above the second air gripper (108) and faces the same direction as the second air gripper (108),
wherein one leg (121) of the hairpin-type conducting bar (120) is provided with a plurality of crescent-shaped insertion holes (303) distributed along the circumference of the mounting disc (301) for allowing the other leg (122) of the hairpin-type conducting bar (120) to be inserted in.

2. The motor hairpin-type conducting-bar winding device of claim 1, wherein the second air gripper (108) is fixed on an L-shaped plate, and the L-shaped plate comprises:
a horizontal plate (110) arranged horizontally and a vertical plate (111) arranged vertically, wherein the second air gripper (108) is fixed to the horizontal plate (110), and the upper end of the vertical plate (111) is fixedly connected with the piston rod of the second air cylinder (106), wherein the vertical plate (111) and the right mounting plate (103) are respectively provided with a guide hole (112) for allowing the pushing board (109) to pass through, and the second air cylinder (106) and the third air cylinder (107) are respectively fixed on the two sides of the right mounting plate (103).

3. The motor hairpin-type conducting-bar winding device of claim 1, wherein the two sides of the second air cylinder (106) are respectively provided with a guide groove (113), and the two sides of the upper end of the vertical plate (111) are respectively fixed with a guide bar (114) capable of sliding in the corresponding guide groove (113), wherein the guide groove (113) is in the same direction as the piston rod of the second air cylinder (106).

4. The motor hairpin-type conducting-bar supplying device of claim 1, wherein a plurality of limiting (211) columns are arranged on one side of the upper end of the pushing plate (200) close to the inclined supplying plate (205), and an auxiliary plate (212) is arranged above the horizontal supplying plate (202), wherein one side of the auxiliary plate (212) close to the pushing plate (200) is provided with a sliding groove (213), and the pushing plate (200) rises and falls in the sliding groove (213), wherein the telescopic cylinder (207) is fixed with the upper end of the auxiliary plate (212), and the lower end of the auxiliary plate (212) is provided with a supplying hole (214) for allowing the horizontal supplying plate (202) to pass through.

5. The motor hairpin-type conducting-bar winding device of claim 1, wherein the two sides of the lifting rod (208) are respectively provided with a clamping block (216), and the two clamping blocks (216) are oppositely arranged, wherein the opposite side of each clamping block (216) is provided with a positioning groove (217).

6. The motor hairpin-type conducting-bar winding device of claim 5, wherein the lower end of the positioning groove (217) is provided with a flared portion (218) which is gradually widened downward.

7. The motor hairpin-type conducting-bar winding device of claim 1, wherein the lifting rod (208) is fixed to a sliding block (219), and the vertical air cylinder (209) propels the sliding block (219) to move on a vertically-arranged track (220).

8. The motor hairpin-type conducting-bar winding device of claim 1, wherein the upper end of the hanging rod (204) is fixedly provided with an elastic buffering portion (221), the surface of the elastic buffering portion (221) is an inclined surface, and the inclined surface inclines in the same direction as the hanging rod (204).

9. The motor hairpin-type conducting-bar winding device of claim 1, wherein the hanging rod (204) is connected with a supporting rod (222) used for supporting the hanging rod (204), a supporting column (223) is hinged with the supporting rod (222), and a ring sleeve (224) is fixed with the upper end of the supporting column (223), wherein the hanging rod (204) is provided with an annular groove, the ring sleeve (224) is sleeved in the annular groove, the outer surface of the ring sleeve (224) is flush with the surface of the hanging rod (204), and the highest end of the hanging rod (204) is hinged with a fixing block (225).

## Patentansprüche

1. Hairpin-Leiterstabwickelvorrichtung für Motoren, umfassend:
einen vierachsigen Roboter (100),
eine Zuführungsvorrichtung,
einen mechanischen Arm, umfassend
einen Verbindungsabschnitt (101) zum festen Verbinden des vierachsigen Roboters (100) und
eine Montageform, umfassend
eine Basis (300) und eine Montagescheibe (301), die mit der Basis (300) befestigt ist, wobei die Montagescheibe (301) mit einer Vielzahl von Einführlöchern (302), die entlang des Umfangs der Montagescheibe (301) verteilt sind, ausgestattet ist, um es möglich zu machen, einen Schenkel (121) des Hairpin-Leiterstabs (120) einzuführen;
wobei die Zuführungsvorrichtung Folgendes umfasst:
eine Schiebeplatte (200),
einen schiebenden Pneumatikzylinder (201), um die Schiebeplatte (200) dazu anzutreiben, sich auf und abwärts zu bewegen,
eine horizontale Zuführungsplatte (202), die auf einer Seite der Schiebeplatte (200) angeordnet ist,
eine Rüttelvorrichtung (203), um die horizontale Zuführungsplatte (202) dazu anzutreiben, derart zu rütteln, dass ein lineares rüttelndes Zuführen erreicht wird,
eine schräg angeordnete Hängestange (204), die mit der horizontalen Zuführungsplatte (202) verbunden ist,
eine geneigte Zuführungsplatte (205), die auf der anderen Seite der Schiebeplatte (200) angeordnet ist,
eine Einführstange (206), die dem höchsten Ende der geneigten Zuführungsplatte (205) zugewandt ist,
einen teleskopischen Pneumatikzylinder (207), um die Einführstange (206) dazu anzutreiben, sich zu dem höchsten Ende der geneigten Zuführungsplatte (205) zu bewegen,
eine Hebestange (208), die sich an dem untersten Ende der geneigten Zuführungsplatte (205) befindet, und einen vertikalen Pneumatikzylinder (209), um die Hebestange (208) dazu anzutreiben, sich auf und abwärts zu bewegen, wobei das unterste Ende der Hängestange (204) mit der horizontalen Zuführungsplatte (202) verbunden ist, die Hebestange (208) horizontal angeordnet und mit einer ringförmigen Nut ausgestattet ist und das obere Ende der Schiebeplatte (200) mit einer Aussparung (210) ausgestattet ist, um es möglich zu machen, die Einführstange einzuführen,
wobei die zwei Seiten des Verbindungsabschnitts (101) von einem mechanischen Arm umfasst sind, jeweils mit einer linken Montageplatte (102) und einer rechten Montageplatte (103), die vertikal angeordnet sind, ausgestattet sind, wobei die oberen Enden der linken Montageplatte (102) und der rechten Montageplatte (103) gebogen und dann fest mit dem Verbindungsabschnitt (101) verbunden sind, wobei das untere Ende der linken Montageplatte (102) fest mit einem horizontal angeordneten ersten Pneumatikzylinder (104) ausgestattet ist und die Kolbenstange des ersten Pneumatikzylinders (104) fest mit einem ersten Pneumatikgreifer (105) verbunden ist, wobei ein zweiter Pneumatikzylinder (106) und ein dritter Pneumatikzylinder (107), die horizontal angeordnet sind, an dem unteren Ende der rechten Montageplatte (103) befestigt sind und die Kolbenstange des zweiten Pneumatikzylinders (106) fest mit einem zweiten Pneumatikgreifer (108) verbunden ist, wobei die Kolbenstange des dritten Pneumatikzylinders (107) fest mit einem Schiebebrett (109) verbunden ist, wobei der erste Pneumatikgreifer (105) und der zweite Pneumatikgreifer (108) horizontal in einer relativ versetzten Weise angeordnet sind und das Schiebebrett (109) sich über dem zweiten Pneumatikgreifer (108) befindet und in die gleiche Richtung zeigt wie der zweite Pneumatikgreifer (108),
wobei ein Schenkel (121) des Hairpin-Leiterstabs (120) mit einer Vielzahl von halbmondförmigen Einführlöchern (303), die entlang des Umfangs der Montagescheibe (301) verteilt sind, ausgestattet ist, um es möglich zu machen, den anderen Schenkel (122) des Hairpin-Leiterstabs (120) einzuführen.

2. Hairpin-Leiterstabwickelvorrichtung für Motoren nach Anspruch 1, wobei der zweite Pneumatikgreifer (108) auf einer L-förmigen Platte befestigt ist und die L-förmige Platte Folgendes umfasst:
eine horizontale Platte (110), die horizontal angeordnet ist, und eine vertikale Platte (111), die vertikal angeordnet ist, wobei der zweite Pneumatikgreifer (108) an der horizontalen Platte (110) befestigt ist und das obere Ende der vertikalen Platte (111) fest mit der Kolbenstange des zweiten Pneumatikzylinders (106) verbunden ist, wobei die vertikale Platte (111) und die rechte Montageplatte (103) jeweils mit einem Führungsloch (112) ausgestattet sind, um ein Passieren des Schiebebretts (109) zu ermöglichen, und wobei der zweite Pneumatikzylinder (106) und der dritte Pneumatikzylinder (107) jeweils auf den zwei Seiten der rechten Montageplatte (103) befestigt sind.

3. Hairpin-Leiterstabwickelvorrichtung für Motoren nach Anspruch 1, wobei die zwei Seiten des zweiten Pneumatikzylinders (106) jeweils mit einer Führungsnut (113) ausgestattet sind und wobei die zwei Seiten des oberen Endes der vertikalen Platte (111) j eweils mit einem Führungsstab (114), der in der Lage ist, in der entsprechenden Führungsnut (113) zu gleiten, befestigt sind, wobei die Führungsnut (113) in der gleichen Richtung verläuft wie die Kolbenstange des zweiten Pneumatikzylinders (106).

4. Hairpin-Leiterstabzuführungsvorrichtung für Motoren nach Anspruch 1, wobei eine Vielzahl von begrenzenden (211) Säulen auf einer Seite des oberen Endes der Schiebeplatte (200) nahe der geneigten Zuführungsplatte (205) angeordnet sind und eine Hilfsplatte (212) über der horizontalen Zuführungsplatte (202) angeordnet ist, wobei eine Seite der Hilfsplatte (212) nahe der Schiebeplatte (200) mit einer Gleitnut (213) ausgestattet ist und sich die Schiebeplatte (200) in der Gleitnut (213) auf und abwärts bewegt, wobei der teleskopische Zylinder (207) mit dem oberen Ende der Hilfsplatte (212) befestigt ist und das untere Ende der Hilfsplatte (212) mit einem Zuführungsloch (214) ausgestattet ist, um ein Passieren der horizontalen Zuführungsplatte (202) zu ermöglichen.

5. Hairpin-Leiterstabwickelvorrichtung für Motoren nach Anspruch 1, wobei die zwei Seiten der Hebestange (208) jeweils mit einem Klemmblock (216) ausgestattet sind und die zwei Klemmblöcke (216) gegenüberliegend angeordnet sind, wobei die gegenüberliegende Seite jedes Klemmblocks (216) mit einer Positionierungsnut (217) ausgestattet ist.

6. Hairpin-Leiterstabwickelvorrichtung für Motoren nach Anspruch 5, wobei das untere Ende der Positionierungsnut (217) mit einem aufgeweiteten Abschnitt (218), der sich graduell nach unten verbreitert, ausgestattet ist.

7. Hairpin-Leiterstabwickelvorrichtung für Motoren nach Anspruch 1, wobei die Hebestange (208) an einem Gleitblock (219) befestigt ist und der vertikale Pneumatikzylinder (209) den Gleitblock (219) dazu antreibt, sich auf einer vertikal angeordneten Schiene (220) zu bewegen.

8. Hairpin-Leiterstabwickelvorrichtung für Motoren nach Anspruch 1, wobei das obere Ende der Hängestange (204) fest mit einem elastischen Pufferabschnitt (221) ausgestattet ist, wobei die Oberfläche des elastischen Pufferabschnitts (221) eine geneigte Oberfläche ist und die geneigte Oberfläche sich in die gleiche Richtung wie die Hängestange (204) neigt.

9. Hairpin-Leiterstabwickelvorrichtung für Motoren nach Anspruch 1, wobei die Hängestange (204) mit einer Stützstange (222), die zum Stützen der Hängestange (204) verwendet wird, verbunden ist, wobei eine Stützsäule (223) scharnierartig mit der Stützstange (222) angeordnet ist und eine Ringmanschette (224) mit dem oberen Ende der Stützsäule (223) befestigt ist, wobei die Hängestange (204) mit einer ringförmigen Nut ausgestattet ist, die Ringmanschette (224) in die ringförmige Nut eingebunden ist, die äußere Oberfläche der Ringmanschette (224) bündig mit der Oberfläche der Hängestange (204) ist und das höchste Ende der Hängestange (204) scharnierartig mit einem Fixierungsblock (225) angeordnet ist.

## Revendications

1. Dispositif d'enroulement de barre conductrice de type en épingle à cheveux de moteur, comprenant :
un robot à quatre axes (100),
un dispositif d'alimentation,
un bras mécanique comprenant une portion de raccordement (101) pour raccorder de manière fixe le robot à quatre axes (100), et
un moule de montage comprenant une base (300) et un disque de montage (301) fixé à la base (300), dans lequel le disque de montage (301) est pourvu d'une pluralité de trous d'insertion (302) répartis le long de la circonférence du disque de montage (301) pour permettre à une jambe (121) de la barre conductrice de type en épingle à cheveux (120) d'y être insérée ;
dans lequel le dispositif d'alimentation comprend :
une plaque de poussée (200),
un vérin pneumatique de poussée (201) pour propulser la plaque de poussée (200) pour qu'elle monte et descende,
une plaque d'alimentation horizontale (202) agencée sur un côté de la plaque de poussée (200),
un vibrateur (203) pour propulser la plaque d'alimentation horizontale (202) pour qu'elle vibre de sorte à obtenir une alimentation vibratoire linéaire,
une tige de suspension (204) agencée obliquement et raccordée à la plaque d'alimentation horizontale (202),
une plaque d'alimentation inclinée (205) agencée sur l'autre côté de la plaque de poussée (200),
une tige d'insertion (206) faisant face à l'extrémité la plus haute de la plaque d'alimentation inclinée (205),
un vérin pneumatique télescopique (207) pour propulser la tige d'insertion (206) pour qu'elle se déplace jusqu'à l'extrémité la plus haute de la plaque d'alimentation inclinée (205),
une tige de levage (208) située à l'extrémité la plus basse de la plaque d'alimentation inclinée (205),
et un vérin pneumatique vertical (209) pour propulser la tige de levage (208) pour qu'elle monte et descende,
dans lequel l'extrémité la plus basse de la tige de levage (204) est raccordée à la plaque d'alimentation horizontale (202), la tige de levage (208) est agencée horizontalement et pourvue d'une rainure annulaire, et l'extrémité supérieure de la plaque de poussée (200) est pourvue d'un évidement (210) pour permettre à la tige d'insertion d'y être insérée,
dans lequel les deux côtés de la portion de raccordement (101) sont compris dans un bras mécanique respectivement pourvu d'une plaque de montage gauche (102) et d'une plaque de montage droite (103) qui sont agencées verticalement, dans lequel les extrémités supérieures de la plaque de montage gauche (102) et de la plaque de montage droite (103) sont pliées puis raccordées de manière fixe à la portion de raccordement (101), dans lequel l'extrémité inférieure de la plaque de montage gauche (102) est pourvue de manière fixe d'un premier vérin pneumatique (104) agencé horizontalement, et la tige de piston du premier vérin pneumatique (104) est raccordée de manière fixe à une première pince pneumatique(105), dans lequel un deuxième vérin pneumatique (106) et un troisième vérin pneumatique (107), qui sont agencés horizontalement, sont fixés à l'extrémité inférieure de la plaque de montage droite (103), et la tige de piston du deuxième vérin pneumatique (106) est raccordée de manière fixe à une seconde pince pneumatique (108), dans lequel la tige de piston du troisième vérin pneumatique (107) est raccordée de manière fixe à une planche de poussée (109), la première pince pneumatique (105) et la seconde pince pneumatique (108) sont agencées horizontalement de manière relativement décalée, et la planche de poussée (109) est située au-dessus de la seconde pince pneumatique (108) et fait face dans la même direction que la seconde pince pneumatique (108),
dans lequel une jambe (121) de la barre conductrice de type en épingle à cheveux (120) est pourvue d'une pluralité de trous d'insertion en forme de croissant (303) répartis le long de la circonférence du disque de montage (301) pour permettre à l'autre jambe (122) de la barre conductrice de type en épingle à cheveux (120) d'y être insérée.

2. Dispositif d'enroulement de barre conductrice de type en épingle à cheveux de moteur selon la revendication 1, dans lequel la seconde pince pneumatique (108) est fixée sur une plaque en forme de L, et la plaque en forme de L comprend :
une plaque horizontale (110) agencée horizontalement et une plaque verticale (111) agencée verticalement, dans lequel la seconde pince pneumatique (108) est fixée à la plaque horizontale (110), et l'extrémité supérieure de la plaque verticale (111) est raccordée de manière fixe à la tige de piston du deuxième vérin pneumatique (106), dans lequel la plaque verticale (111) et la plaque de montage droite (103) sont respectivement pourvues d'un trou de guidage (112) pour permettre le passage de la planche de poussée (109), et le deuxième vérin pneumatique (106) et le troisième vérin pneumatique (107) sont respectivement fixés sur les deux côtés de la plaque de montage droite (103).

3. Dispositif d'enroulement de barre conductrice de type en épingle à cheveux de moteur selon la revendication 1, dans lequel les deux côtés du deuxième vérin pneumatique (106) sont respectivement pourvus d'une rainure de guidage (113), et les deux côtés de l'extrémité supérieure de la plaque verticale (111) sont respectivement fixés avec une barre de guidage (114) capable de coulisser dans la rainure de guidage (113) correspondante, dans lequel la rainure de guidage (113) est dans la même direction que la tige de piston du deuxième vérin pneumatique (106).

4. Dispositif d'alimentation en barre conductrice de type en épingle à cheveux de moteur selon la revendication 1, dans lequel une pluralité de colonnes de limitation (211) sont agencées sur un côté de l'extrémité supérieure de la plaque de poussée (200) à proximité de la plaque d'alimentation inclinée (205), et une plaque auxiliaire (212) est agencée au-dessus de la plaque d'alimentation horizontale (202), dans lequel un côté de la plaque auxiliaire (212) à proximité de la plaque de poussée (200) est pourvu d'une rainure de coulissement (213), et la plaque de poussée (200) monte et descend dans la rainure de coulissement (213), dans lequel le vérin télescopique (207) est fixé à l'extrémité supérieure de la plaque auxiliaire (212), et l'extrémité inférieure de la plaque auxiliaire (212) est pourvue d'un trou d'alimentation (214) pour permettre le passage de la plaque d'alimentation horizontale (202).

5. Dispositif d'enroulement de barre conductrice de type en épingle à cheveux de moteur selon la revendication 1, dans lequel les deux côtés de la tige de levage (208) sont respectivement pourvus d'un bloc de serrage (216), et les deux blocs de serrage (216) sont agencés de manière opposée, dans lequel le côté opposé de chaque bloc de serrage (216) est pourvu d'une rainure de positionnement (217).

6. Dispositif d'enroulement de barre conductrice de type en épingle à cheveux de moteur selon la revendication 5, dans lequel l'extrémité inférieure de la rainure de positionnement (217) est pourvue d'une portion évasée (218) qui s'élargit progressivement vers le bas.

7. Dispositif d'enroulement de barre conductrice de type en épingle à cheveux de moteur selon la revendication 1, dans lequel la tige de levage (208) est fixée à un bloc coulissant (219), et le vérin pneumatique vertical (209) propulse le bloc coulissant (219) pour qu'il se déplace sur une piste agencée verticalement (220).

8. Dispositif d'enroulement de barre conductrice de type en épingle à cheveux de moteur selon la revendication 1, dans lequel l'extrémité supérieure de la tige de suspension (204) est pourvue de manière fixe d'une portion tampon élastique (221), la surface de la portion tampon élastique (221) est une surface inclinée, et la surface inclinée s'incline dans la même direction que la tige de suspension (204).

9. Dispositif d'enroulement de barre conductrice de type en épingle à cheveux de moteur selon la revendication 1, dans lequel la tige de suspension (204) est raccordée à une tige de support (222) utilisée pour supporter la tige de suspension (204), une colonne de support (223) est articulée avec la tige de support (222), et un manchon annulaire (224) est fixé avec l'extrémité supérieure de la colonne de support (223), dans lequel la tige de suspension (204) est pourvue d'une rainure annulaire, le manchon annulaire (224) est manchonné dans la rainure annulaire, la surface externe du manchon annulaire (224) affleure la surface de la tige de suspension (204), et l'extrémité la plus haute de la tige de suspension (204) est articulée avec un bloc de fixation (225).
